# EUROPÄISCHE PATENTSCHRIFT

(11) **EP 2 166 302 B1**
(45) Veröffentlichungstag und Bekanntmachung des Hinweises auf die Patenterteilung: **18.05.2011**
(21) Anmeldenummer: 08016655.6
(22) Anmeldetag: 22.09.2008
(51) Int. Cl.: G01B 3/30, G01B 21/04

(54) **Verfahren zum Anbringen von Kugeln in vorgegebenen Positionen eines Koordinatensystems**
Method for installing balls in pre-defined positions of a coordinate system
Procédé d'application de boules dans des positions prédéterminées d'un système de coordonnées

(43) Veröffentlichungstag der Anmeldung: 24.03.2010
(73) Patentinhaber: AfM Technology GmbH, 73430 Aalen (DE)
(72) Erfinder: Banzhaf, Klaus, 89547 Gerstetten (DE); Hageney, Theo, 73432 Aalen (DE); Bullinger, Alex, 73432 Aalen (DE); Meyer, Wolfram, 90518 Altdorf (DE); Nabs, David, 39288 Burg (DE); Richter, Hendirk, 99947 Bad Langensalza (DE); Heimer, Dietmar, 39288 Burg (DE)
(74) Vertreter: Grünecker, Kinkeldey, Stockmair & Schwanhäusser Anwaltssozietät

(56) Entgegenhaltungen:
- FR-A- 2 619 906
- GB-A- 1 445 277
- US-A- 4 364 182
- US-A1- 2008 123 110

## Beschreibung

### Gebiet der Erfindung

Die Erfindung betrifft ein Verfahren zur Positionierung eines Antastelements an einer Sollposition eines Tragkörpers für das Antastelement.

### Stand der Technik

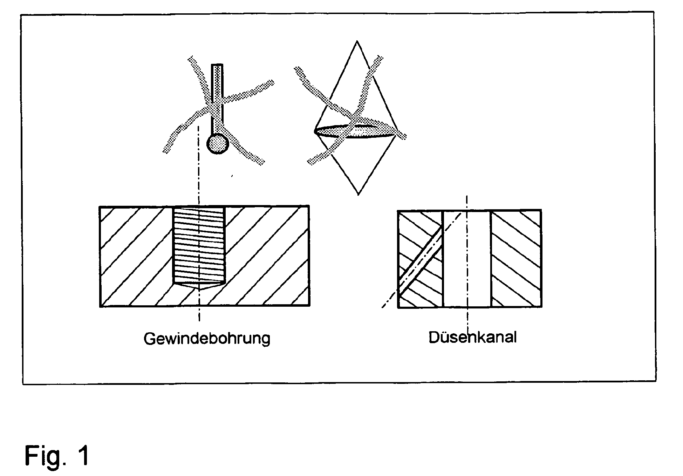

Beim Messen von Werkstücken und Baugruppen sind die Formelemente, deren Position zu messen ist, nicht immer direkt antastbar. Die Messpunkte sind für eine optische Markierung verdeckt oder für eine berührende Antastung nicht zugänglich. Fig. 1 stellt Beispiele von nicht direkt antastbaren Formelementen (Gewindebohrung und Düsenkanal) dar.

In derartigen Fällen werden so genannte Adapter angebracht, welche meist mechanisch so ausgeführt sind, dass sie die Koordinaten des zu messenden Formelementes nach außen übertragen (siehe z.B. US-1445277). Fig. 2 zeigt einen derartigen Adapter zur Positionsmessung einer Gewindebohrung. Der geschliffene Prüfdom trägt das Gewinde wie ein entsprechender Gewinde-Lehrdom, und der Zylinder ist mit einer bestimmten Genauigkeit koaxial bezüglich Ort und Richtung zum Gewinde gefertigt.

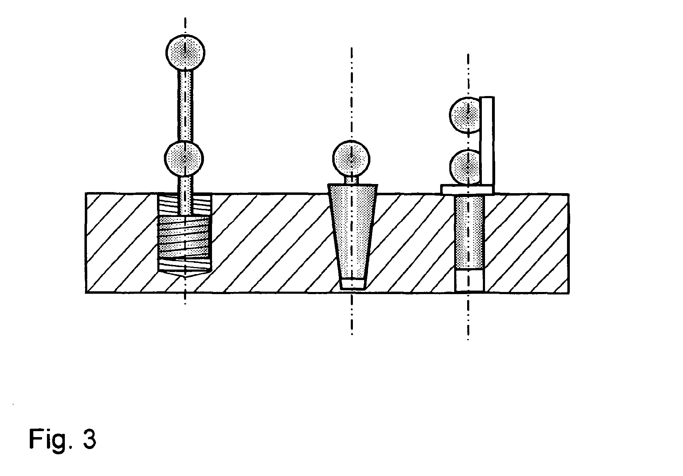

Für höhere Ansprüche an die Genauigkeit werden derartige Adapter auch mit einer (oder mehreren) Kugel(n) auf der anzutastenden Seite ausgeführt sein. Fig. 3 zeigt Beispiele hierzu, wobei die Adapter mit einer oder zwei Kugeln zur Positionsmessung von Bohrungen vorgesehen sind. Die Genauigkeit, mit der die - beispielhaft durch zwei Kugeln - gebildete Achse mit der Achse des zu messenden Formelementes überein stimmt, ist bei den bisher bekannten Herstellungsverfahren jedoch nicht immer ausreichend.

Die Genauigkeit derartiger Hilfselemente ist bei den bekannten Herstellungsverfahren durch die Abweichungen der Kugeln von ihrer Sollposition in einem für manche Anwendungen zu großen Maße begrenzt, was nachteilig ist.

### Beschreibung der Erfindung

Angesichts der Nachteile des Stands der Technik, liegt der Erfindung das Problem zugrunde, die oben genannten Nachteile zu überwinden.

Das genannte Problem wird gelöst durch das erfindungsgemäße Verfahren gemäß Anspruch 1 zur Positionierung eines Antastelements an einer Sollposition eines Tragkörpers für das Antastelement, mit den Schritten: Kontaktieren eines Hilfskörpers mit dem Tastelement eines Koordinatenmessgeräts; Positionieren des Tastelements an der Sollposition; Fixieren der Position des Hilfskörpers; Entfernen des Tastelements; Kontaktieren des Antastelements, anstelle des Tastelements, mit dem Hilfskörper; und Befestigen des Antastelements an dem Tragkörper.

Dieses Verfahren verwendet zur exakten Positionierung des anzubringenden Antastelements (beispielsweise in Form einer Messkugel) vor dessen Befestigung an dem Tragkörper ein hochgenaues Koordinatenmessgerät. Damit ist beispielsweise die Herstellung von Adaptern möglich, bei denen etwa eine durch Kugeln gebildete Achse hochgenau im Koordinatensystem des zu messenden Formelementes liegt. Die Antastelemente können als taktil oder optisch antastbare Elemente ausgebildet sein.

Insbesondere können die Abtastelemente aus reflektierendem Material und/oder in Form von Reflektoren ausbildet sein.

Das erfindungsgemäße Verfahren kann dahingehend weitergebildet werden, dass das Kontaktieren des Hilfskörpers mit dem Tastelement des Koordinatenmessgeräts vor dem Positionieren des Tastelements an der Sollposition erfolgt. Auf diese Weise kann der Hilfskörper bereits mit dem Kopf des Koordinatenmessgeräts bewegt und positioniert werden.

Eine Alternative zur vorangehenden Weiterbildung besteht darin, dass das Positionieren des Tastelements an der Sollposition vor dem Kontaktieren des Hilfskörpers mit dem Tastelement des Koordinatenmessgeräts erfolgt. Dabei wird der Hilfskörper erst nach dem Positionieren des Tastelements daran hingeführt.

Das erfindungsgemäße Verfahren und die zuvor genannten Weiterbildungen können dahingehend weitergebildet werden, dass vor den bereits genanten Schritten ein Ermitteln der Sollposition durch Einmessen eines Koordinatensystems des Tragkörpers erfolgt. Dieses Einmessen wird durch das Koordinatenmessgerät durchgeführt.

Das erfindungsgemäße Verfahren und die zuvor genannten Weiterbildungen können dahingehend weitergebildet werden, dass das Tastelement und das Antastelement kugelförmig mit gleichem Kugeldurchmesser ausgebildet sind, und wobei der Hilfskörper mit einer ringförmigen Anlage oder mit einer Dreipunktberührung ausgebildet ist. Auf diese Weise können Antastelemente in Form von Kugeln genau positioniert werden.

Das erfindungsgemäße Verfahren und die zuvor genannten Weiterbildungen können dahingehend weitergebildet werden, dass das Kontaktieren des Hilfskörpers mit dem Tastelement mittels magnetischem Haften des Hilfskörpers am Tastelement erfolgt. Auf diese Weise ist eine sicherere und einfach lösbare Kontaktierung von Hilfskörper und Tastelement, sowie zwischen Hilfskörper und Antastelement gewährleistet.

Das erfindungsgemäße Verfahren und die zuvor genannten Weiterbildungen können dahingehend weitergebildet werden, dass das Fixieren der Position des Hilfskörpers mittels Kleben erfolgt. Das Fixieren des Hilfskörpers kann dabei beispielsweise an einer während der Herstellung des Adapters verwendeten Halterung erfolgen.

Das erfindungsgemäße Verfahren und die zuvor genannten Weiterbildungen können dahingehend weitergebildet werden, dass der Tragkörper mit einem zylindrischen oder kegelförmigen Ansatz oder einem Gewindedom versehen ist. Damit ist ein so hergestellter Adapter für Bohrungen geeignet.

Das erfindungsgemäße Verfahren und die zuvor genannten Weiterbildungen können dahingehend weitergebildet werden, dass alle Verfahrensschritte für eine Positionierung wenigstens eines weiteren Antastelements an jeweils einer weiteren Sollposition wiederholt werden. Dabei können die positionierten Antastelemente wenigstens teilweise gleich oder unterschiedlich sein (beispielsweise in Bezug auf den Durchmesser bei der Verwendung von Kugeln).

Die zuvor genannte Weiterbildung kann dahingehend weitergebildet werden, dass mehrere Antastelemente in vorbestimmten Abständen zueinander positioniert werden. Auf diese Weise kann eine räumliche Orientierung über mehrere Kugeln erfolgen.

Die Weiterbildung bezüglich einer Positionierung weiterer Antastelemente in Kombination mit der Weiterbildung von kugelförmigen Antastelementen kann dahingehend weitergebildet werden, dass mehrere Kugeln mit gleichem Durchmesser in einer körperlich gefluchteten Reihenanordnung als Kugelleiste positioniert werden. Eine solche Kugelleiste kann als Geradheitsnormal eingesetzt werden.

Die Weiterbildung bezüglich einer Positionierung weiterer Antastelemente in Kombination mit der Weiterbildung von kugelförmigen Antastelementen kann weiterhin dahingehend weitergebildet werden, dass mehrere Kugeln auf einer Platte positioniert werden, so dass die Pole der Kugeln eine Ebene bilden. Eine solche Kugelplatte kann zur messtechnischen Definition bzw. Kalibrierung einer Ebene verwendet werden.

Die Weiterbildung bezüglich einer Positionierung weiterer Antastelemente in Kombination mit der Weiterbildung von kugelförmigen Antastelementen kann weiterhin dahingehend weitergebildet werden, dass mindestens fünf Kugeln auf einem Zylinder als Tragkörper positioniert werden. Der Hülldurchmesser der Kugeln kann als Grenzlehre für Bohrungen verwendet werden.

Die Weiterbildung bezüglich einer Positionierung weiterer Antastelemente in Kombination mit der Weiterbildung von kugelförmigen Antastelementen kann weiterhin dahingehend weitergebildet werden, dass die Kugeln auf einem Zylinder als Tragkörper positioniert werden, deren Anordnung zum Prüfen der Einschraubfähigkeit in Innengewinde geeignet ist.

Die Weiterbildung bezüglich einer Positionierung weiterer Antastelemente in Kombination mit der Weiterbildung von kugelförmigen Antastelementen kann weiterhin dahingehend weitergebildet werden, dass die Kugeln auf einem Kegel als Tragkörper peripher positioniert werden, so dass deren Hüllfläche vorbestimmte Grenzwerte nachbildet.

Die verschiedenen Weiterbildungen lassen sich unabhängig voneinander einsetzen oder miteinander kombinieren.

Weitere bevorzugte Ausführungsformen der Erfindung werden im Nachfolgenden unter Bezugnahme auf die Zeichnungen beschrieben.

### Kurzbeschreibung der Zeichnungen

- Fig. 1: zeigt Beispiele von nicht direkt antastbaren Formelementen.

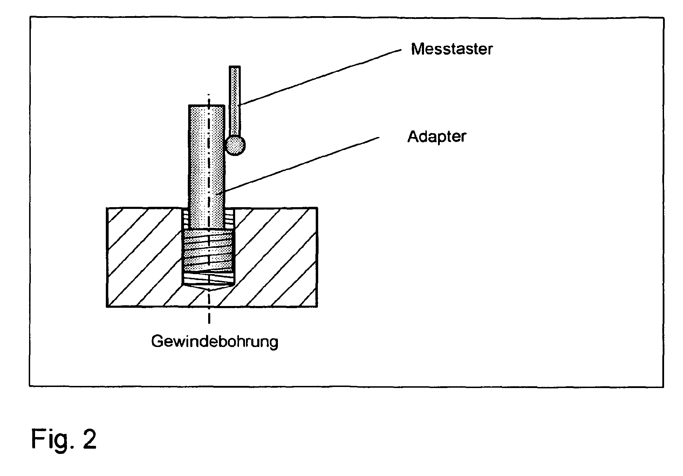

- Fig. 2: zeigt einen Adapter zur Positionsmessung einer Gewindebohrung.
- Fig. 3: zeigt Beispiele von Adaptern mit Kugeln.
- Fig. 4-6: veranschaulichen das erfindungsgemäße Verfahren.

### Beschreibung der Ausführungsformen

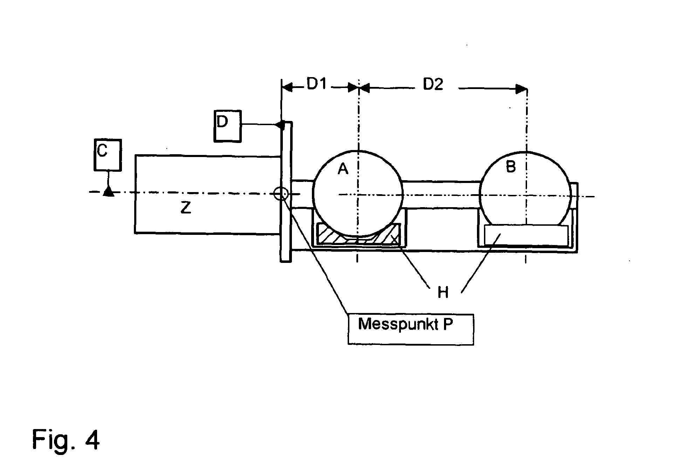

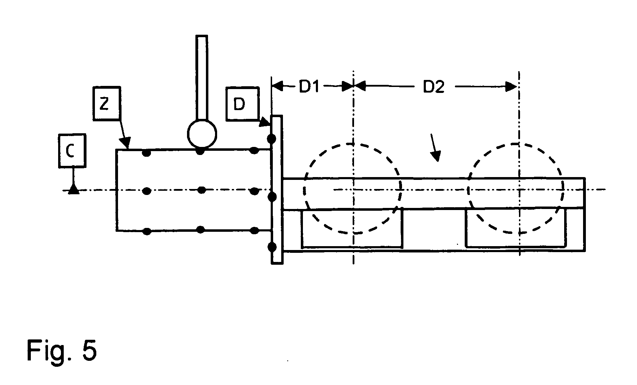

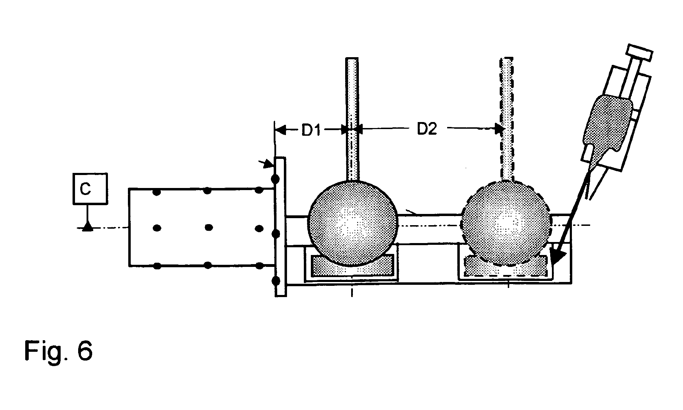

In den Figuren 4-6 wird das erfindungsgemäße Verfahren veranschaulicht.

Das entwickelte Verfahren benutzt zur exakten Positionierung der anzubringenden Messkugeln vor deren Befestigung an einem Tragkörper (Kugelträger) ein hochgenaues Koordinatenmessgerät KGM. Damit ist die Herstellung von Adaptern möglich, bei denen die durch die Kugeln gebildete Achse hochgenau im Koordinatensystem des zu messenden Formelementes liegt.

Fig. 4 zeigt Hilfskörper H bereits nach der Positionierung mit dem KMG mit Kugeln als Anmesselemente bzw. Antastelementen zur Befestigung in Sollposition.

Ein Passzylinder Z definiert mit dem Durchstoßpunkt seiner Achse C durch die Flanschfläche D den Messpunkt an der Außenkontur eines Messobjektes, welches entsprechende Aufnahmebohrungen trägt. Deren Zentrum ist der Messpunkt P, der durch die Achse der beiden Kugeln A und B und deren Distanz D1 bzw. D2 vom Messpunkt P berechnet wird. Es werden also die beiden Kugelzentren stellvertretend für den Zylinder Z und die Ebene D gemessen.

Dazu besteht die Forderung, dass die Kugelmitten so genau wie möglich in den vorgegebenen Sollpositionen auf dem Prüfdorn positioniert sind.

Um dies zu erreichen, werden bei diesem Verfahren ein oder mehrere sogenannte Hilfskörper H eingesetzt, die die Messkugeln in reproduzierbarer Weise aufnehmen können (ringförmige Anlage oder Dreipunkt-Berührung).

Die Hilfskörper sind magnetisiert oder tragen einen kleinen Magneten, so dass eine Stahlkugel auch nach einem Wechsel in definierter räumlicher Position zum Hilfskörper anliegt.

Nach dem Einmessen des Koordinatensystems des Kugelträgers, gebildet durch die Achse C des Zylinders und der Ebene D wird mit dem Koordinatenmessgerät eine Stahlkugel mit dem exakt gleichen Durchmesser wie die später eingesetzte Messkugel in die Sollposition gebracht. An ihr haftet der z.B. ringförmig ausgeführte Hilfskörper H, der damit ebenfalls die richtige Position einnimmt.

In dieser Position verharrt der Messkopf des KMG, bis der Hilfskörper durch Kleben vorfixiert ist. Nachdem, auf diese Weise der oder die Hilfskörper in ihrer korrekten Position vorfixiert sind, kann der Kugelträger vom KMG entfernt werden, um die Hilfskörper endgültig zu fixieren.

Setzt man jetzt die Messkugeln mit gleichem Durchmesser ein, so sind ihre Zentren exakt in der vorgegebenen Sollposition.

Ein erster Schritt des erfindungsgemäßen Verfahrens in dieser Ausführungsform betrifft das Einmessen des Koordinatensystems. Der Schnittpunkt der Achse C des Zylinders Z mit der Ebene D ist Referenz für die Position der Messkugeln (gestrichelt gezeichnet). Ihre Zentren liegen auf der Achse C im Abstand D1 bzw.D2 von der Ebene D.

Ein zweiter Schritt des erfindungsgemäßen Verfahrens in dieser Ausführungsform betrifft das Positionieren der Hilfskörper H1 und H2. Sie haften magnetisch an einer als Tastelement am Messkopf des KMG befestigten Stahlkugel mit dem Durchmesser der Messkugeln. Das Zentrum der Stahlkugel wird in die Sollkoordinaten positioniert. Damit nimmt das Hilfselement automatisch die korrekte Position ein. Das Hilfselement wird mit geeignetem Kleber vorfixiert.

Das Verfahren ist insbesondere für alle Hilfskörper geeignet, bei denen Kugeln zur Bildung einer bestimmten geometrischen Anordnung in exakt vorgegebenen Positionen angebracht werden müssen.

## Patentansprüche

1. Verfahren zur Positionierung eines Antastelements an einer Sollposition eines Tragkörpers für das Antastelement, mit den Schritten:
Kontaktieren eines Hilfskörpers (H) mit einem Tastelement eines Koordinatenmessgeräts;
Positionieren des Tastelements an der Sollposition;
Fixieren der Position des Hilfskörpers;
Entfernen des Tastelements;
Kontaktieren des Antastelements, anstelle des Tastelements, mit dem Hilfskörper; und
Befestigen des Antastelements an dem Tragkörper.

2. Verfahren nach Anspruch 1, wobei das Kontaktieren des Hilfskörpers mit dem Tastelement des Koordinatenmessgeräts vor dem Positionieren des Tastelements an der Sollposition erfolgt.

3. Verfahren nach Anspruch 1, wobei das Positionieren des Tastelements an der Sollposition vor dem Kontaktieren des Hilfskörpers mit dem Tastelement des Koordinatenmessgeräts erfolgt.

4. Verfahren nach einem der vorangehenden Ansprüche, mit dem vorangehenden Schritt:
Ermitteln der Sollposition durch Einmessen eines Koordinatensystems des Tragkörpers.

5. Verfahren nach einem der vorangehenden Ansprüche, wobei das Tastelement und das Antastelement kugelförmig mit gleichem Kugeldurchmesser ausgebildet sind, und wobei der Hilfskörper mit einer ringförmigen Anlage oder mit einer Dreipunktberührung ausgebildet ist.

6. Verfahren nach einem der vorangehenden Ansprüche, wobei das Kontaktieren des Hilfskörpers mit dem Tastelement mittels magnetischem Haften des Hilfskörpers am Tastelement erfolgt.

7. Verfahren nach einem der vorangehenden Ansprüche, wobei das Fixieren der Position des Hilfskörpers mittels Kleben erfolgt.

8. Verfahren nach einem der vorangehenden Ansprüche, wobei der Tragkörper mit einem zylindrischen oder kegelförmigen Ansatz oder einem Gewindedorn versehen ist.

9. Verfahren nach einem der vorangehenden Ansprüche, wobei alle Verfahrensschritte für eine Positionierung wenigstens eines weiteren Antastelements an jeweils einer weiteren Sollposition wiederholt werden.

10. Verfahren nach Anspruch 9, wobei mehrere Antastelemente in vorbestimmten Abständen zueinander positioniert werden.

11. Verfahren nach Anspruch 9 in Kombination mit Anspruch 5, wobei mehrere Kugeln mit gleichem Durchmesser in einer körperüch gefluchteten Reihenanordnung als Kugelleiste positioniert werden.

12. Verfahren nach Anspruch 9 in Kombination mit Anspruch 5, wobei mehrere Kugeln auf einer Platte positioniert werden, so dass die Pole der Kugeln eine Ebene bilden.

13. Verfahren nach Anspruch 9 in Kombination mit Anspruch 5, wobei mindestens fünf Kugeln auf einem Zylinder als Tragkörper positioniert werden.

14. Verfahren nach Anspruch 9 in Kombination mit Anspruch 5, wobei die Kugeln auf einem Zylinder als Tragkörper positioniert werden, deren Anordnung zum Prüfen der Einschraubfähigkeit in Innengewinde geeignet ist.

15. Verfahren nach Anspruch 9 in Kombination mit Anspruch 5, wobei die Kugeln auf einem Kegel als Tragkörper peripher positioniert werden, so dass deren Hüllfläche vorbestimmte Grenzwerte nachbildet.

## Claims

1. Method of positioning a contact element on a desired position of a support body for the contact element, comprising the steps of:
contacting an auxiliary body (H) with a marker element of a coordinate measuring device;
positioning the marker element on the desired position;
fixing the position of the auxiliary body;
removing the marker element;
contacting the contact element, instead of the marker element, with the auxiliary body; and
fixing the contact element on the support body.

2. Method as claimed in claim 1, whereby the auxiliary body is contacted with the marker element of the coordinate measuring device prior to positioning the marker element on the desired position.

3. Method as claimed in claim 1, whereby the marker element is positioned on the desired position prior to contacting the auxiliary body with the marker element of the coordinate measuring device.

4. Method as claimed in one of the preceding claims, comprising the prior step of:
determining the desired position by calibrating a coordinate system of the support body.

5. Method as claimed in one of the preceding claims, whereby the marker element and the contact element are ball-shaped with an identical ball diameter, and the auxiliary body is provided with an annular seating or with a three-point contact.

6. Method as claimed in one of the preceding claims, whereby the auxiliary body is contacted with the marker element by means of magnetic adhesion of the auxiliary body to the marker element.

7. Method as claimed in one of the preceding claims, whereby the position of the auxiliary body is fixed by means of gluing.

8. Method as claimed in one of the preceding claims, whereby the support body is provided with a cylindrical or conical shoulder or a threaded pin.

9. Method as claimed in one of the preceding claims, whereby all the method steps are repeated in order to position at least one other contact element on another respective desired position.

10. Method as claimed in claim 9, whereby several contact elements are positioned at predefined distances from one another.

11. Method as claimed in claim 9 in combination with claim 5, whereby several balls of identical diameter are positioned in a physically flush aligned arrangement to form a ball strip.

12. Method as claimed in claim 9 in combination with claim 5, whereby several balls are positioned on a plate so that the poles of the balls form a plane.

13. Method as claimed in claim 9 in combination with claim 5, whereby at least five balls are positioned on a cylinder constituting the support body.

14. Method as claimed in claim 9 in combination with claim 5, whereby the balls are positioned on a cylinder constituting the support body in an arrangement suitable for testing ability to screw into internal threads.

15. Method as claimed in claim 9 in combination with claim 5, whereby the balls are positioned peripherally on a cone constituting the support body so that their external surface reproduces predefined limit values.

## Revendications

1. Procédé pour positionner un élément palpeur au niveau d'une position théorique d'un corps de support pour l'élément palpeur, avec les étapes qui consistent :
à mettre en contact un corps auxiliaire (H) avec un élément de palpage d'un appareil de mesure à coordonnées ;
à positionner l'élément de palpage au niveau de la position théorique ;
à fixer la position du corps auxiliaire;
à enlever l'élément de palpage ;
à mettre en contact l'élément palpeur, au lieu de l'élément de palpage, avec le corps auxiliaire ; et
à fixer l'élément palpeur au corps de support.

2. Procédé selon la revendication 1, selon lequel le contact du corps auxiliaire avec l'élément de palpage de l'appareil de mesure à coordonnées se fait avant le positionnement de l'élément de palpage au niveau de la position théorique.

3. Procédé selon la revendication 1, selon lequel le positionnement de l'élément de palpage au niveau de la position théorique se fait avant le contact du corps de support avec l'élément de palpage de l'appareil de mesure à coordonnées.

4. Procédé selon l'une des revendications précédentes, avec l'étape préalable qui consiste:
à déterminer la position théorique en étalonnant un système de coordonnées du corps de support.

5. Procédé selon l'une des revendications précédentes, selon lequel l'élément de palpage et l'élément palpeur ont la forme de billes de même diamètre, et le corps auxiliaire est pourvu d'un dispositif annulaire ou d'un contact en trois points.

6. Procédé selon l'une des revendications précédentes, selon lequel le contact du corps auxiliaire avec l'élément de palpage se fait à l'aide d'une adhérence magnétique du corps auxiliaire sur l'élément de palpage.

7. Procédé selon l'une des revendications précédentes, selon lequel la fixation de la position du corps auxiliaire se fait par collage.

8. Procédé selon l'une des revendications précédentes, selon lequel le corps de support est pourvu d'une pièce rapportée cylindrique ou conique ou d'une tige filetée.

9. Procédé selon l'une des revendications précédentes, selon lequel toutes les étapes du procédé sont répétées au niveau de positions théoriques supplémentaires pour le positionnement d'au moins un élément palpeur supplémentaire.

10. Procédé selon la revendication 9, selon lequel plusieurs éléments palpeurs sont positionnés avec des écartements mutuels prédéfinis.

11. Procédé selon la revendication 9 combinée avec la revendication 5, selon lequel plusieurs billes de même diamètre sont positionnées en une rangée physiquement alignée, sous la forme d'une bordure à billes.

12. Procédé selon la revendication 9 combinée avec la revendication 5, selon lequel plusieurs billes sont positionnées sur une plaque, de sorte que les pôles des billes forment un plan.

13. Procédé selon la revendication 9 combinée avec la revendication 5, selon lequel au moins cinq billes sont positionnées sur un cylindre comme corps de support.

14. Procédé selon la revendication 9 combinée avec la revendication 5, selon lequel les billes sont positionnées sur un cylindre, comme corps de support, dont la disposition convient pour tester la possibilité de vissage dans le filetage intérieur.

15. Procédé selon la revendication 9 combinée avec la revendication 5, selon lequel les billes sont positionnées sur la périphérie d'un cône, comme corps de support, de sorte que leur surface enveloppante reproduit des valeurs limites prédéfinies.
